# FASCICULE DE BREVET EUROPEEN

(11) **EP 4 065 505 B1**
(45) Date de publication et mention de la délivrance du brevet: **19.03.2025**
(21) Numéro de dépôt: 20824607.4
(22) Date de dépôt: 27.11.2020
(51) Int. Cl.: B66F 9/075, G06T 7/73

(54) **PROCEDE DE DETERMINATION DE LA POSITION RELATIVE D'UN PREHENSEUR**
VERFAHREN ZUR BESTIMMUNG DER RELATIVEN POSITION EINES GREIFERS
METHOD FOR DETERMINING THE RELATIVE POSITION OF A GRIPPER

(30) Priorité: 29.11.2019 FR 1913523
(43) Date de publication de la demande: 05.10.2022
(73) Titulaire: BALYO, 94200 Ivry-sur-Seine (FR)
(72) Inventeur: YARCE, Andrés, 94200 Ivry-sur-Seine (FR)
(74) Mandataire: IP Trust
(86) Numéro de dépôt international: PCT/FR2020/052208
(87) Numéro de publication internationale: WO 2021/105636

(56) Documents cités:
- WO-A1-2018/031660
- WO-A1-2018/173663
- US-A1- 2020 024 114
- JUNHAO XIAO ET AL: "Pallet recognition and localization using an RGB-D camera", INTERNATIONAL JOURNAL OF ADVANCED ROBOTIC SYSTEMS, vol. 14, no. 6, 6 November 2017 (2017-11-06), CR, XP055719236, ISSN: 1729-8814, DOI: 10.1177/1729881417737799
- LIANG SHIH-CHENG ET AL: "Model-based 3D pose estimation for pick-and-place application", 2017 FIFTEENTH IAPR INTERNATIONAL CONFERENCE ON MACHINE VISION APPLICATIONS (MVA), MVA ORGANIZATION, 8 May 2017 (2017-05-08), pages 412 - 415, XP033126655, DOI: 10.23919/MVA.2017.7986888

## Description

### DOMAINE DE L'INVENTION

La présente invention concerne de manière générale les véhicules de manutention présentant une fourche de préhension d'une palette, et plus particulièrement un système d'imagerie et de localisation d'une palette à prélever par le véhicule.

### CONTEXTE DE L'INVENTION

Dans un entrepôt ou un centre de distribution classique, les articles en stock palettisés sont stockés dans des étagères ou autres structures de stockage alignées de chaque côté d'allées généralement longues et parallèles. Pour maximiser l'espace disponible, il est fréquent que plusieurs structures de stockage soient empilées verticalement, de sorte que le stock puisse être stocké à des hauteurs élevées. En conséquence, un opérateur d'un véhicule de manutention qui récupère et/ou range un stock peut être amené à regarder vers le haut depuis une position de fonctionnement du véhicule pour identifier la hauteur et la position latérale des fourches pour récupérer ou ranger le stock.

Au moment du travail de positionnement, le conducteur doit manipuler le levier de levage tout en vérifiant avec les yeux si les fourches sont positionnées sur des trous dans la palette ou légèrement au-dessus de la surface du plateau en regardant vers le haut (3 à 6 mètres par exemple). Il est toutefois extrêmement difficile de déterminer si les fourches et une palette ou similaire sont positionnées horizontalement avec les yeux en regardant vers le haut depuis le bas, et même une personne qualifiée a besoin de temps pour ce positionnement. En cas de déplacement progressif des fourches vers une charge ou une crémaillère en manipulant, par exemple, le levier de levage, le travail doit être effectué avec précaution, réduisant ainsi l'efficacité de travail.

Une formation approfondie peut être nécessaire pour effectuer efficacement les ajustements de positionnement nécessaires. Même avec une capacité suffisante, un positionnement correct peut prendre plus de temps que souhaité pour une utilisation efficace du véhicule de manutention et de l'opérateur. De plus, dans les entrepôts ou autres environnements de manutention utilisant des véhicules entièrement autonomes pour prélever ou placer des articles, la disposition et le positionnement des étagères et des palettes ont tendance à être rigoureusement espacés et espacés horizontalement.

Certains chariots-élévateurs récents comportent une caméra attachée au chariot pour permettre au conducteur de voir une image d'un rack ou d'une palette vue devant les fourches via l'écran d'un dispositif d'affichage au siège du conducteur afin de résoudre le problème ci-dessus. Cet appareil facilite le travail de positionnement des fourches en hauteur.

La caméra est fixée à la partie d'extrémité distale ou à la partie latérale des fourches ou à une position prédéterminée du mât.

### État de la technique

On connaît dans l'état de la technique le brevet WO2018/173663 et sa phase nationale américaine US2020024114 concernant un dispositif monté sur un véhicule comportant une unité pour la détection d'une lame à partir d'un dispositif de reconnaissance spatiale, et pour le calcul d'une distance d'introduction qui indique la distance sur laquelle la lame détectée a été introduite dans une cible d'introduction. Ce dispositif est basé sur l'acquisition de nuages de points par un laser impulsionnel à balayage.

Cette solution n'est pas bien adaptée car elle est couteuse et fragile, pour un équipement industriel travaillant dans des environnements poussiéreux et avec des palettes dont les caractéristiques de réflexion lumineuses ne sont pas maîtrisées. Elle nécessite par ailleurs une puissance de calcul très importante.

La demande de brevet WO2018031660A1 décrit une autre solution pour localiser des palettes à l'aide d'images sur la base de données de nuages de points. Dans un mode de réalisation, un procédé de localisation de palettes consiste à acquérir, par une caméra 3D, une première image de données de nuages de points, la première image étant représentative de la palette. Le procédé comprend également la génération d'une seconde image par la troncation des données de nuages de points de la première image, et la projection orthogonale des données de nuages de points restantes de la première image. Le procédé comprend en outre la génération d'une troisième image par la création d'une image binaire à partir de la deuxième image, et la génération d'une image de corrélation croisée par corrélation croisée de la troisième image avec un modèle d'une poche de palette. Le procédé comprend également la détermination d'un angle de rotation (R) de la palette par l'analyse de l'image de corrélation croisée.

Il s'agit également d'une solution mettant en œuvre un lidar mal adapté à une utilisation sur un équipement industriel.

### Inconvénients de l'art antérieur

Les solutions de l'art antérieur sont basées sur une l'acquisition de nuages de points par un laser impulsionnel à balayage. De tels équipements sont onéreux et présentent une vitesse d'acquisition insuffisante pour les applications visées. Les lidars sont également sensibles aux poussières environnantes et à la qualité de la réflexion des cibles, ce qui n'est pas possible dans l'application considérée.

De plus, pour obtenir la précision de la position calculée est fortement dépendante de la position angulaire l'acquisition par rapport à la fourche. En effet, la précision de la position relative de la fourche par rapport à la palette doit être de l'ordre de quelques millimètres. Pour une distance typiquement de trois mètres, un désalignement angulaire de 2° de l'axe optique se traduit par une erreur de position calculée de 100 millimètres.

### Solution apportée par l'invention

Afin de répondre à cet inconvénient, l'invention propose selon son acception la plus générale un procédé de détermination de la position relative d'un préhenseur comportant des organes allongés mâles par rapport à un récepteur comportant des logements femelles complémentaires desdites organes allongés comprenant, le procédé étant défini par la revendication 1.

Le référentiel de la fourche n'est pas nécessairement confondu avec le référentiel de la caméra (jeu, réglage, alignement,...)

Selon une première variante, ledit référentiel Refₚ est déterminé par rapport à un point de référence 0_{p,réf} sur un modèle numérique du préhenseur par un traitement de reconnaissance et de superposition d'au moins une zone caractéristique (arête, rectangle).

Selon une deuxième variante, ledit référentiel Refₚ est déterminé par rapport à un point de référence 0_{p,réf} sur un modèle numérique du préhenseur par un traitement de reconnaissance et de superposition d'un profil ou d'une forme caractéristique de l'image de référence et l'image réelle.

Avantageusement, ledit référentiel Refₚ est déterminé par rapport à un point de référence 0_{p,réf} sur un modèle numérique du préhenseur par un traitement de reconnaissance et de superposition homothétique d'un profil ou d'une forme caractéristique de l'image de référence et l'image réelle.

Selon une première variante, l'image de référence et l'image réelle sont des images bidimensionnelles.

Selon une deuxième variante, l'image de référence et l'image réelle sont des images tridimensionnelles.

L'invention concerne aussi l'application du procédé selon l'invention pour la détermination de la position d'une fourche d'un engin de manutention par rapport à une palette.

L'invention concerne également un engin de manutention comportant une fourche et une caméra d'acquisition d'une image de la zone de préhension de ladite fourche, ainsi qu'un calculateur pour l'exécution d'un traitement conforme à l'invention.

De préférence, ladite caméra est mobile en hauteur et/ou latéralement. Avantageusement, la fourche est mobile latéralement.

### Description détaillée d'un exemple non limitatif de l'invention

La présente invention sera mieux comprise à la lecture de la description détaillée d'un exemple non limitatif de l'invention qui suit, se référant aux dessins annexés où :
[Fig.1] la figure 1 représente une vue de face d'un engin de manutention selon l'invention
[Fig.2] la figure 2 représente un exemple d'image acquise par la caméra
[Fig.3] la figure 3 représente un exemple d'image d'une palette extraite depuis une image acquise par la caméra
[Fig.4] la figure 4 représente un exemple de reconnaissance d'angles et de barycentre sur une image de palette extraite depuis une image acquise par la caméra

### Description générale de l'engin de manutention

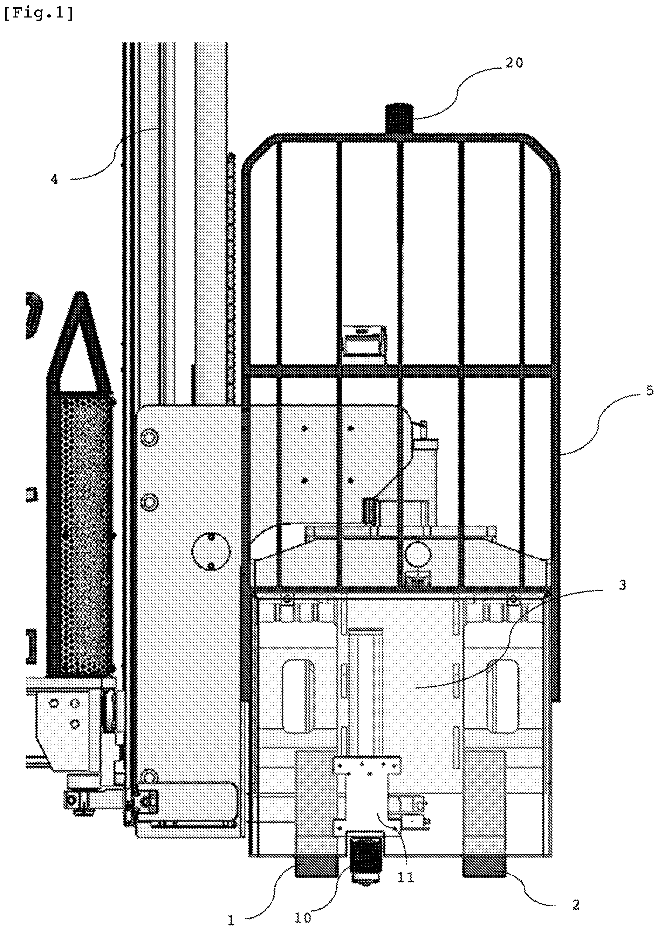

La figure 1 représente une vue de face d'un engin de manutention selon l'invention dont les caractéristiques mécaniques sont usuelles, avec deux fourches (1, 2) supportées par un châssis (3) mobile verticalement par rapport à une potence (4). Le châssis (3) est prolongé par un cadre grillagé (5), protégeant le conducteur de l'engin et supportant à sa partie supérieure une caméra 360° (20) ou un lidar pour le positionnement de l'engin.

Le châssis (5) supporte à sa partie inférieure une caméra (10) disposée en partie proximale (c'est-à-dire éloignée de l'extrémité des fourches (1, 2)) positionnée pour que son champ de prise de vue inclus une partie avant de l'une des fourches et la zone dans laquelle se trouve la partie frontale de la palette au moment de l'engagement de la fourche (1, 2).

Cette caméra (10) est fixée sur une platine (11) mobile verticalement pour permettre son positionnement en dessous des fourches (1, 2) lorsque les fourches sont en position élevée (la distance entre l'axe optique de la caméra (10) et la surface inférieure des fourches (1, 2) est alors d'environ 300 mm), et son escamotage entre les fourches (1, 2) lorsque les fourches sont proches du sol.

### Image acquise par la caméra (10)

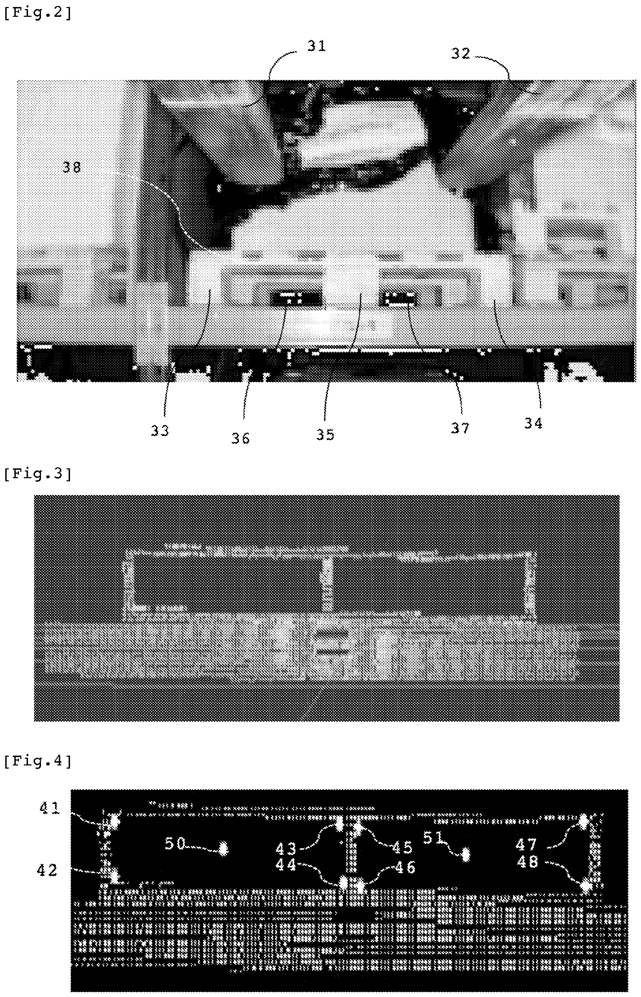

La figure 2 représente un exemple d'image acquise par la caméra (10). On distingue l'image (31, 32) de l'extrémité des fourches respectivement (1, 2), et le contour de la face frontale de la palette, notamment les montants latéraux (33, 34) et médian (35), la face supérieure (38) et les ouvertures frontales des deux logements (36, 37) dans laquelle les fourches (1, 2) devront s'engager.

### Traitement de l'image acquise par la caméra (10)

Le but des traitements est de caractériser les coordonnées tridimensionnelles de points caractéristiques (par exemple les barycentres des ouvertures frontales) de la palette et des fourches, à partir d'une image unique. Ces points caractéristiques sont ainsi déterminés dans le référentiel de la caméra, quelle que soit la position de la caméra par rapport à l'engin.

Ces informations permettent ensuite de déterminer les écarts entre les coordonnées des points caractéristiques de la palette d'une part, et des points caractéristiques de la fourche d'autre part, puis de calculer la trajectoire des fourches pour minimiser ces écarts.

Pour cela, on déterminer à partir de l'image acquise par la caméra (10) les coordonnées et les orientations en 6° de liberté de la fourche dans le référentiel caméra et les coordonnées et les orientations en 6° de liberté de la palette dans référentiel caméra.

A partir de l'image dont la figure 2 représente un exemple, on procède à un filtrage de cette image avec un modèle numérique de la face frontale de la palette pour extraire l'image de la palette seule (figure 3).

L'étape suivante consiste à procéder à un traitement de reconnaissance d'angles (41 à 48) et de barycentre (50, 51) des zones encadrées par les angles (41 à 44) et (45 à 48).

## Revendications

1. Procédé de détermination de la position relative d'un préhenseur comportant des organes allongés mâles (1, 2) par rapport à un récepteur comportant des logements femelles complémentaires desdites organes allongés (1, 2) comprenant, les étapes suivantes :
- l'acquisition répétée d'une image d'un environnement physique, dans le champ d'une caméra (10), positionnée de sorte que ladite image comprenne la vue de l'extrémité des fourches respectivement (1, 2), le contour de la face frontale de la palette, notamment les montants latéraux (33, 34) et médian (35), la face supérieure (38) et les ouvertures frontales des deux logements (36, 37) dans laquelle les fourches (1, 2) devront s'engager et
- pour chaque pixel de ladite image, convertir l'emplacement bidimensionnel du pixel dans le plan de ladite image et la valeur de profondeur de l'image en un point tridimensionnel correspondant à un pixel étant défini par trois composantes de coordonnées (x, y, z),
le procédé comporte en outre :
- une étape d'extraction de ladite image
o D'un ensemble de pixels correspondant audit préhenseur
o D'un ensemble de pixels correspondant audit récepteur
le procédé étant **caractérisée en ce qu'**il comprend en outre :
- une étape de localisation d'un référentiel Refᵣ dudit récepteur, constitué d'un trièdre de coordonnées cartésiennes d'une origine 0ᵣ (xᵣ ,yᵣ, zᵣ, Aᵣ, Bᵣ, Cᵣ) dans le référentiel de ladite caméra dont l'origine correspond au point focal de ladite caméra et l'orientation de référence correspond à l'axe optique, ledit référentiel Refᵣ étant déterminé par rapport à un point de référence 0_{r,réf} sur un modèle numérique du récepteur
- une étape de localisation d'un référentiel Refₚ dudit préhenseur, constitué d'un trièdre de coordonnées cartésiennes d'une origine 0_{P} (xₚ ,yₚ, zₚ, Aₚ, Bₚ, Cₚ) dans le référentiel de ladite caméra dont l'origine correspond au point focal de ladite caméra et l'orientation de référence correspond à l'axe optique, ledit référentiel Refₚ étant déterminé par rapport à un point de référence 0_{p,réf} sur un modèle numérique du préhenseur
- une étape de calcul de la distance cartésienne et l'orientation relatives entre ledit référentiel Refᵣ dudit récepteur et ledit référentiel Refₚ dudit préhenseur.

2. Procédé de détermination de la position relative selon la revendication 1 **caractérisé en ce que** ledit référentiel Refₚ est déterminé par rapport à un point de référence O_{p,ref} sur un modèle numérique du préhenseur par un traitement de reconnaissance et de superposition d'au moins une zone caractéristique (arête, rectangle).

3. Procédé de détermination de la position relative selon la revendication 1 **caractérisé en ce que** ledit référentiel Refₚ est déterminé par rapport à un point de référence O_{p,ref} sur un modèle numérique du préhenseur par un traitement de reconnaissance et de superposition d'un profil ou d'une forme caractéristique d'une image de référence et l'image réelle.

4. Procédé de détermination de la position relative selon la revendication précédente **caractérisé en ce que** ladite superposition est constituée par une superposition homothétique d'un profil ou d'une forme caractéristique de l'image de référence et l'image réelle.

5. Procédé de détermination de la position relative selon la revendication 3 à 4 **caractérisé en ce que** l'image de référence et l'image réelle sont des images bidimensionnelles.

6. Procédé de détermination de la position relative selon la revendication 3 à 4 **caractérisé en ce que** l'image de référence et l'image réelle sont des images tridimensionnelles.

7. Application du procédé selon l'une quelconque des revendications précédentes pour la détermination de la position d'une fourche d'un engin de manutention par rapport à une palette.

8. Engin de manutention comportant une fourche et une caméra d'acquisition d'une image de la zone de préhension de ladite fourche, ainsi qu'un calculateur pour l'exécution d'un traitement conforme à la revendication 1.

9. Engin de manutention selon la revendication 8 **caractérisé en ce que** ladite caméra est mobile en hauteur.

10. Engin de manutention selon la revendication 8 **caractérisé en ce que** la fourche est mobile latéralement.

## Patentansprüche

1. Verfahren zum Bestimmen der relativen Position eines Greifers, der längliche männliche Elemente (1, 2) umfasst, im Vergleich zu einer Aufnahme, die weibliche Aussparungen aufweist, die zu den länglichen Elementen (1, 2) komplementär sind, umfassend die folgenden Schritte:
- wiederholtes Erfassen eines Bildes einer physischen Umgebung in dem Feld einer Kamera (10), die so positioniert ist, dass das Bild die Sicht auf das Ende der jeweiligen Gabeln (1, 2), den Umriss der Vorderseite der Palette, insbesondere die seitlichen Balken (33, 34) und den mittleren Balken (35), die Oberseite (38) und die vorderen Öffnungen der zwei Aussparungen (36, 37) umfasst, in die die Gabeln (1, 2) eingreifen sollen, und
- für jedes Pixel des Bildes, Umwandeln der zweidimensionalen Position des Pixels in der Bildebene und des Tiefenwerts des Bildes in einen dreidimensionalen Punkt, der einem Pixel entspricht, das durch drei Koordinatenkomponenten (x, y, z) definiert ist,
wobei das Verfahren ferner aufweist:
- einen Schritt zum Extrahieren des Bildes
o aus einem Satz von Pixeln, die dem Greifer entsprechen
o aus einem Satz von Pixeln, die der Aufnahme entsprechen
wobei das Verfahren **dadurch gekennzeichnet ist, dass** es ferner umfasst:
- einen Schritt zum Lokalisieren eines Bezugssystems Refᵣ der Aufnahme, bestehend aus einem Trieder kartesischer Koordinaten mit einem Ursprung 0ᵣ (xᵣ, yᵣ, zᵣ, Aᵣ, Bᵣ, Cᵣ) in dem Bezugssystem der Kamera, dessen Ursprung dem Brennpunkt der Kamera entspricht und dessen Bezugsausrichtung der optischen Achse entspricht, wobei das Bezugssystem Refᵣ im Vergleich zu einem Bezugspunkt 0_{r,ref} an einem digitalen Modell der Aufnahme bestimmt wird
- einen Schritt zum Lokalisieren eines Bezugssystems Ref_{P} des Greifers, bestehend aus einem Trieder kartesischer Koordinaten mit einem Ursprung 0ₚ (xₚ, yₚ, zₚ, Aₚ, Bₚ, Cₚ) in dem Bezugssystem der Kamera, dessen Ursprung dem Brennpunkt der Kamera entspricht und dessen Bezugsausrichtung der optischen Achse entspricht, wobei das Bezugssystem Ref_{P} im Vergleich zu einem Bezugspunkt O_{P,ref} an einem digitalen Modell des Greifers bestimmt wird
- einen Schritt zum Berechnen des kartesischen Abstands und der relativen Ausrichtung zwischen dem Bezugssystem Refᵣ der Aufnahme und dem Bezugssystem Ref_{P} des Greifers.

2. Verfahren zum Bestimmen der relativen Position nach Anspruch 1,
**dadurch gekennzeichnet, dass** das Bezugssystem Ref_{P} im Vergleich zu einem Bezugspunkt O_{p,ref} an einem digitalen Modell des Greifers durch eine Erkennungs- und Überlagerungsverarbeitung mindestens eines kennzeichnenden Bereichs (Kante, Rechteck) bestimmt wird.

3. Verfahren zum Bestimmen der relativen Position nach Anspruch 1,
**dadurch gekennzeichnet, dass** das Bezugssystem Ref_{P} im Vergleich zu einem Bezugspunkt O_{p,ref} an einem digitalen Modell des Greifers durch eine Erkennungs- und Überlagerungsverarbeitung eines Profils oder einer Form bestimmt wird, die für ein Bezugsbild und das tatsächliche Bild kennzeichnend ist.

4. Verfahren zum Bestimmen der relativen Position nach dem vorstehenden Anspruch, **dadurch gekennzeichnet, dass** die Überlagerung aus einer homothetischen Überlagerung eines Profils oder aus einer Form besteht, die für das Bezugsbild und das tatsächliche Bild kennzeichnend ist.

5. Verfahren zum Bestimmen der relativen Position nach den Ansprüchen 3 bis 4, **dadurch gekennzeichnet, dass** das Bezugsbild und das tatsächliche Bild zweidimensionale Bilder sind.

6. Verfahren zum Bestimmen der relativen Position nach den Ansprüchen 3 bis 4, **dadurch gekennzeichnet, dass** das Bezugsbild und das tatsächliche Bild dreidimensionale Bilder sind.

7. Anwendung des Verfahrens nach einem der vorstehenden Ansprüche für die Bestimmung der Position einer Gabel einer Transporteinrichtung im Vergleich zu einer Palette.

8. Transporteinrichtung, die eine Gabel und einer Kamera zum Erfassen eines Bildes des Greifbereichs der Gabel sowie einen Computer für die Ausführung einer Verarbeitung nach Anspruch 1 aufweist.

9. Transporteinrichtung nach Anspruch 8, **dadurch gekennzeichnet, dass** die Kamera höhenbewegbar ist.

10. Transporteinrichtung nach Anspruch 8, **dadurch gekennzeichnet, dass** die Gabel seitlich bewegbar ist.

## Claims

1. Method for determining the relative position of a gripper, which comprises elongate male elements (1, 2), with respect to a receiver, which comprises female housings which are complementary to the elongate elements (1, 2), the method including the following steps:
- repeatedly acquiring an image of a physical environment in the field of a camera (10) which is positioned so that the image comprises the view of the end of respective forks (1, 2), the contour of the front face of the pallet, in particular the lateral uprights (33, 34) and central upright (35), the top face (38) and the front openings of the two housings (36, 37) in which the forks (1, 2) are to engage, and
- converting, for each pixel of the image, the two-dimensional location of the pixel in the plane of the image and the depth value of the image into a three-dimensional point which corresponds to a pixel being defined by three coordinate components (x, y, z),
the method further comprises:
- a step of extracting the image
o from a set of pixels corresponding to the gripper
o from a set of pixels corresponding to the receiver
the method being **characterized in that** it further includes:
- a step of locating a reference frame Refᵣ of the receiver, consisting of a Cartesian coordinate trihedron which has an origin 0ᵣ (xᵣ, yᵣ, zᵣ, Aᵣ, Bᵣ, Cᵣ) in the reference frame of the camera and of which the origin corresponds to the focal point of the camera and the reference orientation corresponds to the optical axis, the reference frame Refᵣ being determined with respect to a reference point 0_{r,ref} on a digital model of the receiver
- a step of locating a reference frame Refₚ of the gripper, consisting of a Cartesian coordinate trihedron which has an origin 0ₚ (xₚ, yₚ, zₚ, Aₚ, Bₚ, Cₚ) in the reference frame of the camera and of which the origin corresponds to the focal point of the camera and the reference orientation corresponds to the optical axis, the reference frame Refₚ being determined with respect to a reference point 0_{p,ref} on a digital model of the gripper
- a step of calculating the relative Cartesian distance and orientation between the reference frame Refᵣ of the receiver and said reference frame Refₚ of the gripper.

2. Method for determining the relative position according to claim 1,
**characterized in that** the reference frame Refₚ is determined with respect to a reference point O_{p,ref} on a digital model of the gripper by means of a process of recognition and superposition of at least one characteristic region (edge, rectangle).

3. Method for determining the relative position according to claim 1,
**characterized in that** the reference frame Refₚ is determined with respect to a reference point O_{p,ref} on a digital model of the gripper by means of a process of recognition and superposition of a profile or a characteristic shape of a reference image and the actual image.

4. Method for determining the relative position according to the preceding claim, **characterized in that** superposition consists of homothetic superposition of a profile or a characteristic shape of the reference image and the real image.

5. Method for determining the relative position according to claims 3 to 4,
**characterized in that** the reference image and the actual image are two-dimensional images.

6. Method for determining the relative position according to claims 3 to 4,
**characterized in that** the reference image and the actual image are three-dimensional images.

7. Application of the method according to any of the preceding claims for determining the position of a fork of a handling device relative to a pallet.

8. Handling device comprising a fork, a camera for acquiring an image of the gripping region of the fork, and a computer for carrying out a process in accordance with claim 1.

9. Handling device according to claim 8, **characterized in that** the camera is movable in height.

10. Handling device according to claim 8, **characterized in that** the fork is movable laterally.
